# EUROPEAN PATENT SPECIFICATION

(11) **EP 0 471 973 B1**
(45) Date of publication and mention of the grant of the patent: **25.09.1996**
(21) Application number: 91111577.2
(22) Date of filing: 11.07.1991
(51) Int. Cl.: C08L 51/00, C08L 77/00

(54) **Thermoplastic compositions based on vinyl-aromatic graft copolymer and polyamide**
Thermoplastische Zusammensetzungen auf der Basis von Vinyl-aromatischen Pfropfcopolymeren und Polyamid
Compositions thermoplastiques à base de copolymère greffé vinylaromatique et polyamide

(30) Priority: 12.07.1990 IT 2092190
(43) Date of publication of application: 26.02.1992
(73) Proprietor: ENICHEM S.p.A., I-20124 Milano (IT)
(72) Inventor: Ghidoni, Dario, I-46020 Gonzaga, Mantova (IT); Fasulo, Gian Claudio, I-46010 San Silvestro, Mantova (IT); Rossi, Anna Grazia, I-46100 Mantova (IT); Bonetti, Luigi, I-46030 Virgilio, Mantova (IT); Borghi, Italo, I-44100 Ferrara (IT)
(74) Representative: Barz, Peter, Dr.

(56) References cited:
- EP-A- 0 266 221
- EP-A- 0 355 792

## Description

The present invention relates to thermoplastic compositions based on vinyl-aromatic graft copolymer and polyamide.

More particularly, the present invention relates to thermoplastic compositions based on impact-resistant (preferably styrenic) graft copolymer and polyamide, endowed with improved mechanical properties, particularly an improved impact resistance especially when measured on test pieces of high thickness; these compositions are particularly suitable for injection molding and thermoforming.

As is known, impact-resistant vinyl-aromatic copolymers are usually obtained by bulk or bulk-suspension polymerization of olefinic rubber solutions, such as ethylene-propylene (EPM) or ethylene-propylene-non-conjugated diene (EPDM) rubber solutions, in a vinyl-aromatic monomer, either alone or mixed with other polymerizable ethylenically unsaturated monomers.

Styrene-acrylonitrile copolymers grafted onto olefinic rubbers (AES) show a very good impact resistance but their low thermoresistance makes them unsuitable for applications where temperatures of, e.g., 120 to 160°C are used and for the manufacture of products which come into contact with parts heated at such temperatures.

It is known that a way of providing this missing property of AES copolymers is to prepare a blend with other polymers having a good thermoresistance such as, for example, polyamides. In fact, said resins show satisfactory elongation, high energy absorption, especially in ball drop tests, and a very good thermoresistance. On the other hand, the high notch sensitivity and water absorption thereof constitute significant limitations to the use of these resins. Moreover, polyamides are rarely compatible with impact-resistant vinyl-aromatic copolymers and therefore the interfaces between the domains of the blend components represent very weak areas along which the breaking of the material can easily take place.

In order to make polyamides compatible with impact-resistant vinyl-aromatic copolymers, DE-A-31 20 803 proposes to use a compatibilizer composed of a styrene copolymer containing from 2 to 50% by weight of carboxylic acid and/or reactive anhydride groups. The compatibilizing coplymer described in said document has a molecular weight between 500 and 20,000; in particular 500 and 7,000, and preferably between 800 and 2,000.

The so obtained mixtures have improved impact strength (IZOD) properties which, however, are not completely satisfactory for several applications.

According to EP-A-202214, the impact strength of the polyamide compositions can be improved by preparing a blend comprising:
a) 5 to 79.5% by weight of a composition grafted onto rubber, consisting of a graft copolymer of 15 to 85% by weight of at least one monomer selected from C₁-C₄ alkyl methacrylates, C₁-C₄ alkyl acrylates, methacrylonitrile and acrylonitrile and of 85 to 15% by weight of a vinyl-aromatic monomer, wherein the monomers are polymerized in the presence of and grafted onto a rubber substrate having a glass transition temperature below 0°C, the amount of rubber being from 5 to 80% by weight and the amount of graft copolymer being from 95 to 20% by weight;
b) 94.5 to 20% by weight of a polyamide; and
c) 0.5 to 60% by weight of a compatibilizing copolymer comprising a copolymerized, functionalized monomer capable of reacting with the polyamide, the concentration of the functionalized monomer being from 0.05 to 4% by moles, with respect to the copolymer.

However, the compositions so obtained do not show the optimum combination of properties for all of the applications in which they can be used.

In particular, an increase in impact strength can be obtained by using an excess of impact-resistant vinyl-aromatic polymer with respect to the polyamide resin; however, this increase is achieved at the expense of the thermoresistance. Therefore the obtained products cannot be processed at a temperature above about 120 to 140°C. On the other hand, by increasing the polyamide resin content, the thermoresistance of the composition increases, but at the expense of the impact strength.

EP-A-358 892 discloses impact resistant thermoplastic molding compositions on the basis of polyphenylene ether graft copolymers and polyamides, said polyphenylene ether graft copolymers being obtained by reacting 100 parts of a polyphenylene ether with 0.1 to 6 parts of a mixture of 10 to 50 mole percent of maleic anhydride and 90 to 50 mole percent of a vinyl-aromatic compound

EP-A-355 792 discloses, i.a., a mixture of polyamide resin and a modified olefin polymer which may be an ethylene-ethylenic unsaturated ester copolymer having 0.1 to 10 % by weight of an unsaturated dicarboxylic anhydride added thereto, said copolymer may contain units derived from vinyl aromatic monomer.

It has now been found that the use of a high impact vinyl-aromatic graft copolymer containing in the chain units derived from an ethylenically unsaturated comonomer having in its molecule a carboxylic group or one of its derivatives, not only allows to avoid the use of a compatibilizing agent (due to the fact that it is compatible as such with the polyamide resin) but also imparts an optimum combination of properties to the corresponding compositions, making them applicable in all the fields where both high impact strength and high thermoresistance are required.

Therefore the present invention provides thermplastic compositions having an optimum balance of mechanical, thermal and rheological properties, particularly high impact resistance (IZOD) characteristics, especially on test pieces of high thickness, comprising:
(A) from 10 to 90% by weight of high impact vinyl-aromatic graft copolymer composed of a vinyl-aromatic monomer/acrylic monomer-copolymer and olefinic elastomer, said copolymer being at least partially grafted onto said olefinic elastomer and containing (preferably in turn grafted onto said copolymer) from 0.1 to 2% by weight of units of an ethylenically unsaturated monomer having a carboxylic group or one of its derivatives such as anhydride, amide or ester in its molecule;
(B) from 90 to 10% by weight of polyamide resin.

The weight ratio of high impact vinyl-aromatic graft copolymer and polyamide resin (A:B) preferably ranges from 70:30 and 30:70.

Component (A) of the thermoplastic compositions of the present invention is a high impact vinyl-aromatic graft copolymer which preferably comprises:
- 100 parts by weight of a high impact vinyl-aromatic copolymer composed of from 90 to 30% by weight of a vinyl-aromatic monomer/ethylenically unsaturated acrylic monomer-copolymer which is at least partially grafted onto 10 to 70% by weight of an olefinic elastomer, and
- from about 0.1 to about 2% parts by weight of units of an ethylenically unsaturated monomer containing in its molecule a carboxylic group or one of the derivatives thereof, such as anhydride, amide or ester groups, said monomer being preferably grafted onto said high impact vinyl-aromatic copolymer.

In the vinyl-aromatic monomer/acrylic monomer-copolymer, the weight ratio of the two types of monomers preferably ranges from 90:10 to 50:50, particularly from 80:20 to 60:40.

The amount of ethylenically unsaturated monomer(s) containing in the molecule a carboxylic group or one of its derivatives is preferably from 0.3 to 1% by weight, with respect to the high impact vinyl-aromatic copolymer.

The high impact vinyl-aromatic graft copolymers (A) used in the compositions of the present invention can be prepared, e.g., by means of a direct polymerization of the constituting monomers or by grafting the ethylenically unsaturated monomer containing a carboxylic group (derivative) onto the previously prepared high impact graft copolymer of vinyl-aromatic monomer/acrylic monomer/olefinic elastomer, in an extruder in the presence of a (peroxidic) catalyst and at a temperature which corresponds to at least the melting point of the components.

The polymerization is preferably carried out continuously, using a solution of a mixture of monomers including at least one vinyl-aromatic monomer, at least one acrylic monomer and at least one ethylenically unsaturated monomer with a carboxylic group (derivative) in the presence of an olefinic elastomer, a polymerization initiator and an inert solvent.

Also, the polymerization is preferably carried out in one or more reaction steps (arranged in series) and in each step the reaction mass is gently and homogeneously stirred to ensure a perfect thermal exchange.

For instance, the olefinic elastomer and the initiator are homogeneously dissolved in the monomers and in the solvent, then the solution is fed to the first reaction step; the polymerization is then continued in the subsequent steps at a temperature of, e.g., about 70 to about 150°C and at a pressure which is higher than the vapor pressure of the fed monomers and the solvent.

When the polymerization process is finished, the reaction mass is caused to flow through a thin-film evaporator heated at a temperature of, e.g., about 150 to 300°C and equipped with rotating blades which render the polymer sufficiently shear stress resistant to obtain the required morphological structure. The unreacted monomers and the solvent nay then be recycled from the evaporator and fed to the first step.

This procedure makes it possible to polymerize the monomers with gentle stirring, allowing, at the same time, an excellent thermal control of the reaction without taking into consideration the size and structure of the particles which will be carried out in the final step, in the thin-film evaporator in which the unreacted monomers and solvent are eliminated. At the same time, the particle size is reduced to values below 1, preferably of from 0.1 to 0.4 µm by means of a dynamic action which causes a variation in the structure of the elastomeric phase.

The solvent used, if any, is preferably an aromatic hydrocarbon such as benzene, toluene, ethyl-benzene, xylene, isopropyl-benzene, etc. The amount of solvent used generally is from 50 to 300, and preferably from 60 to 150 parts by weight per 100 parts by weight of monomers plus elastomer.

The polymerization reaction, as generally all the solution graft-polymerization reactions, is carried out in the presence of a free-radical polymerization initiator. Any known free-radical initiator can be used, even if the known organic peroxides normally used in graft-polymerizations are preferred. Examples of suitable organic peroxides are aromatic diacyl peroxides such as dibenzoyl peroxide; peroxy-esters such as tert-butyl peroxy-isobutyrate, tert-butyl peroxy-laurate, tert-butyl peroxy-benzoate, etc.; perketals such as 1,1-di-tert-butyl-peroxy-3,3,5-trimethyl-cyclohexane, 2,2-di-tert-butyl-peroxy butane, etc.; peroxycarbonates such as tert-butyl-peroxy-isopropyl-carbonate; and peroxy-ketones such as 1,1-bis-tert-butyl-peroxy-3,3,5-trimethylcyclohexanone,etc.. It is also possible to use mixtures of two or more of the above peroxides. The amount of peroxide usually is such as to allow a conversion in the first polymerization reactor of between 40 to 80% by weight; normally the amount used is from 0.1 to 2.0% by weight with resepct to the total amount of monomers and elastomer.

The above polymerization process allows to achieve a high degree of grafting onto the elastomeric chain of the resin of the vinyl-aromatic monomer(s), the ethylenically unsaturated acrylic monomer(s) and the ethylenically unsaturated monomer(s) containing a carboxylic group (derivative). This grafting takes place mainly during the first polymerization step which occurs isothermally, preferably at a temperature which corresponds to the half-life of about 1 hour of the peroxide initiator used. In practice, the temperatures used are usually from about 100 to about 250°C.

The thin-film evaporator used in the above process for the final operation and for obtaining the desired particle size, can be of any known type. In particular, the thin-film evaporator described in EP-A-267025 is preferred.

The above continuous solution polymerization process is already known and described, e.g., in EP-A-286071, whose contents are an integral part of the present specification.

The high-impact vinyl-aromatic graft copolymers (A) used in the compositions of the present invention can also be prepared, by extrusion or by means of any other equipment suitable for heat mixing, by direct reaction of the previously prepared high impact copolymer of vinyl-aromatic monomer, ethylenically unsaturated acrylic monomer and olefinic elastomer with the ethylenically unsaturated monomer containing a carboxylic group (derivative), preferably in the presence of a peroxidic initiator having a half-life of, e.g., from about 2 to about 20 seconds at about 200°C.

It is preferred to carry out the reaction at temperatures higher than 150°C and, more preferably, from about 170 to about 250°C with a residence time of more than about 15 seconds.

Specific examples of suitable peroxidic initiators are tert-butyl-cumyl peroxide, bis(tert-butyl-peroxy-isopropyl) benzene, di-tert-butyl peroxide, 2,5-dimethyl-2,5-di-tert-butyl peroxy-hexane, dicumyl peroxide etc. All of the above peroxides are commercially available, e.g., under the trade names Trigonox® and Perkadox® (AKZO).

Concentrations of the peroxidic initiator of from 0.01 to 1 and preferably from 0.1 to 0.5 parts by weight per 100 parts by weight of the high-impact copolymer are normally used for this purpose.

The vinyl-aromatic monomer used in the production of the high-impact graft copolymer is preferably selected from those of general formula (I): 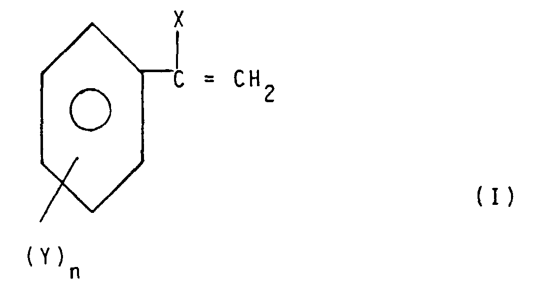 wherein:
- X: is hydrogen or C₁-C₄ alkyl (e.g. methyl or ethyl);
- Y: represents halogen (F, Cl, Br, I, preferably F and Cl) or C₁-C₄ alkyl (e.g. methyl or ethyl); and
- n: is zero or an integer of from 1 to 5.

Specific examples of vinyl-aromatic monomers of general formula (I) are styrene; methyl-styrene; mono-, di-, tri-, tetra-and penta-chlorostyrene and the corresponding alpha-methyl-styrenes; styrenes alkylated in the nucleus and the corresponding alpha-methyl-styrenes such as ortho- and para-methyl-styrenes; ortho- and para-methyl-alpha-methylstyrenes, 3,5-dimethyl-styrene and tert-butyl-styrene, etc.

These monomers can be used alone or as mixture of two or more thereof.

The ethylenically unsaturated acrylic monomer preferably has the general formula (II): 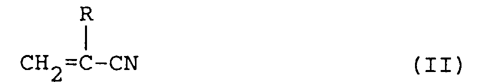 wherein R is hydrogen or a C₁-C₅ alkyl group (e.g. methyl or ethyl). Acrylonitrile is particularly preferred.

Olefinic elastomers suitable for use in the copolymers (A) include both those with a high degree of unsaturation and those with a low degree of unsaturation. Along the elastomers with low unsaturation degree EPM and EPDM rubbers in which the ethylene/propylene weight ratio preferably ranges from 90:10 to 20:80 may be mentioned. The content thereof in unconjugated diene is preferably from 4 to 50 in terms of the iodine number. The unconjugated diene can be, e.g., a norbornene, a cyclic diene such as di-cyclo-pentadiene and cyclo-octadiene-1,5, an aliphatic diene such as pentadiene-1,4, hexadiene-1,4, hexadiene-1,5, etc..

The preferred EPDM rubbers are the terpolymers of ethylene/propylene/5-methyl-tetrahydroindene, ethylene/propylene/6-ethylidene-2-norbornene, ethylene/propylene/6-methylene-2-norbornene and ethylene/ propylene/5-ethylidene-2-norbornene.

Examples of elastomers with a high degree of unsaturation are polybutadiene, polyisoprene, copolymers of butadiene and/or isoprene with styrene or with other monomers, polychloroprene etc..

The amount of elastomer is preferably such as to have a concentration of rubber of from 10 to 70, and particularly from 15 to 40% by weight in the final copolymer.

Any ethylenically unsaturated monomer containing a carboxylic group or a derivative thereof in its molecule can be used for the production of the high impact vinyl-aromatic graft copolymers (A). Specific examples of such monomers are maleic acid, fumaric acid, maleic anhydride, maleic amide, unsaturated monocarboxylic acids (preferably having 3 to 30 carbon atoms) such as acrylic acid, crotonic acid, vinyl-acetic acid, 2-, 3- or 4-pentenoic acid, alpha-ethyl-acrylic acid, beta-methyl-crotonic acid, 2-methyl-2-pentenoic acid, alpha-ethyl-crotonic acid, 2,2-dimethyl-3-butenoic acid, heptenoic acid, 2-octenoic acid, 9-tetradecenoic acid, 9-hexadecenoic acid, 2-octadecenoic acid, 9-octadecenoic acid, decosenoic acid, erucic acid, 2,4-pentadienoic acid, diallylacetic acid, linoleic acid, linolenic acid, etc. and esters, amides and anhydrides of the above unsaturated acids.

The preferred ethylenically unsaturated monomers are maleic anhydride, maleic imides and fumaric acid, particularly the first one because of its high reactivity.

It is understood that in the graft-polymerization not all of the unsaturated monomers are grafted onto the rubber substrate; some of them may form free copolymers which are present in physical admixture with the graft-copolymer.

The amount of monomers grafted onto the rubber substrate can be determined by the extraction of the copolymer with a solvent of the ungrafted resin.

The polyamide resins (B) useful for the compositions of the present invention are the conventional ones, injection moldable, generally known as nylon resins, including aliphatic polylactams obtained by opening of the lactam rings and the polyamides produced by polycondensation of aliphatic diamines (e.g. containing from 4 to 14 carbon atoms) with aliphatic dicarboxylic acids (e.g. containing from 4 to 12 carbon atoms).

Specific examples of suitable polyamide resins are nylon 4; nylon 6; nylon 7; nylon 11; nylon 12; nylon 6,6; nylon 6,9; nylon 6,10 and nylon 6,12.

Partially aromatic nylons can also be used as component (B) in the compositions of the present invention.

The term "partially aromatic nylons" denotes the nylons obtained by partial or complete substitution of an aliphatic residue of an aliphatic nylon by an aromatic residue.

For example, the residues of adipic acid in nylon 6,6 can be replaced by terephthalic or isophthalic acid residues or by mixtures thereof; similarly some amine residues can be of aromatic nature.

Preferred polyamide resins are nylon 6, nylon 6,6 and random copolymers of nylon 6 and nylon 6,6.

The average molecular weight of the polyamide resins (B) is advantageously at least 10,000 and preferably at least 15,000 and the melting point thereof is preferably at least 200°C.

The compositions of the present invention can be prepared by hot mixing in any known mixing unit endowed with medium or high mixing power, such as single- and double-screw extruders, Banbury mixers, mixing rollers etc., e.g., at a temperature of from about 220 to about 260°C.

The compositions of the present invention may additionally contain stabilizing agents, UV stabilizers and/or other additives such as plasticizers, lubricants, flame retardant agents, flow agents, antistatics, dyes, pigments, glass fibres or other inorganic fillers etc. which are to impart particular characteristics to said compositions.

The compositions of the present invention are easily processable and show a host of properties which make them suitable for use in the manufacture of articles having both a high impact strength and a high thermal resistance and a reduced water sensitivity.

These compositions find application in the field of motor transportation, for the production of pieces that can be painted in an oven, parts that come into contact with the motor, electric household appliances, electronic and generally technical articles having different forms such as cups, boxes, containers, panels, sheets, rods, etc.

The compositions can also be used for the production of foamed articles, using known techniques.

The following examples are merely illustrative but not limitative of embodiments of the present invention.

In said examples all parts and percentages are expressed by weight, unless otherwise indicated.

### EXAMPLES 1 TO 6

By means of a Baker-Perkins MPC V30 double-screw extruder there were extruded, with degassing and at a temperature of 240 to 250°C, compositions consisting of:
(A) styrenic high impact graft copolymer, consisting of 35% by weight of EPDM rubber with a Mooney viscosity at 100°C of 62-72 ML-4 and an iodine number of 18 and 65% by weight of a styrene/acrylonitrile (SAN) copolymer (weight ratio 70/30) containing grafted thereon maleic anhydride in the amount reported in the following table I. This copolymer was prepared according to the process described in example 2 of EP-A-457 275;
(B) Nylon 6 sold under the trade name TERNIL® B 27 (Montedipe) and having an average molecular weight of 18,000.

The weight ratios of the components of the composition are reported in table I.

By cutting the strands coming out of the extruder granules were obtained which were dried for 2 to 4 hours at 80 to 90°C.

To evaluate their mechanical and thermal properties, the granules were injection molded at a temperature of 220 to 240°C on a Negri & Bossi V17 press to obtain test pieces having the dimensions required by the ASTM standards.

The determined characteristics and the used methods were as follows:

### Mechanical properties

The elongation at break in tensile tests, the ultimate tensile stress, the yield strength and the elastic modulus were determined according to ASTM D638, and the IZOD notched impact strength at 23°C was determined according to ASTM D256, on test pieces having thicknesses of 3.2 mm and 12.7 mm.

### Thermal properties

The VICAT A softening temperature (1 kg in oil) was determined according to ISO 306.

The measured properties are reported in the following table I.

**TABLE I**

| COMPOSITIONS | | EXAMPLES | | | | | |
|---|---|---|---|---|---|---|---|
| | | 1* | 2 | 3 | 4 | 5 | 6 |
| (A) High impact styrenic graft copolymer | | 50 | 50 | 50 | 50 | 50 | 50 |
| amount of maleic anhydride (% by weight) | | 0 | 0.15 | 0.20 | 0.40 | 0.50 | 1 |
| (B) Nylon 6 | | 50 | 50 | 50 | 50 | 50 | 50 |

| PROPERTIES | UNITS | | | | | | |
|---|---|---|---|---|---|---|---|
| .IZOD (3.2 mm) | J/m | 70 | 220 | 930 | 970 | 1000 | 1050 |
| .IZOD (12.7 mm) | J/m | 60 | 200 | 300 | 400 | 700 | 710 |
| .Elastic modulus | N/mm² | 1500 | 1600 | 1700 | 1980 | 1960 | 1500 |
| .Ultimate tensile | | | | | | | |
| stress | N/mm² | 36 | 36 | 40 | 40 | 40 | 40 |
| .Yield strength | N/mm² | 35 | 37 | 37 | 40 | 40 | 36 |
| .Elongation | % | 10 | 75 | 125 | 152 | 155 | 170 |
| .VICAT A | °C | 192 | 191 | 192 | 193 | 191 | 191 |

| | | | | | | | |
|---|---|---|---|---|---|---|---|
| * Comparative example | | | | | | | |

## Claims

1. Thermoplastic compositions with improved mechanical properties, comprising:
(A) from 10 to 90% by weight of high impact vinyl-aromatic graft copolymer composed of a vinyl-aromatic monomer/acrylic monomer-copolymer and olefinic elastomer, said copolymer being at least partially grafted onto the olefinic elastomer and containing, preferably grafted thereon, from 0.1 to 2% by weight of an ethylenically unsaturated monomer having a carboxylic group or a derivative thereof in its molecule;
(B) from 90 to 10% by weight of polyamide resin.

2. Compositions according to claim 1, wherein the weight ratio (A) : (B) ranges from 70:30 to 30:70.

3. Compositions according to any one of the preceding claims, wherein the graft copolymer (A) comprises 100 parts by weight of a high impact vinyl-aromatic copolymer composed of from 90 to 30% by weight of a vinyl-aromatic monomer/acrylic monomer-copolymer, at least partially grafted onto 10 to 70% by weight of an olefinic elastomer, and from 0.1 to 2 parts by weight of units of an ethylenically unsaturated monomer having in its molecule a carboxylic group or a derivative thereof, said ethylenically unsaturated monomer being preferably grafted onto said high impact vinyl-aromatic copolymer.

4. Compositions according to any one of the preceding claims, wherein the weight ratio of vinyl-aromatic monomer to acrylic monomer in the high impact vinyl-aromatic copolymer ranges from 90:10 to 50:50, particularly from 80:20 to 60:40.

5. Compositions according to any one of the preceding claims, wherein the amount of the ethylenically unsaturated monomer containing in its molecule a carboxylic group or a derivative thereof is from 0.3 to 1% by weight with respect to the copolymer.

6. Compositions according to any one of the preceding claims, wherein the vinyl-aromatic monomer is selected from compounds of general formula (I): 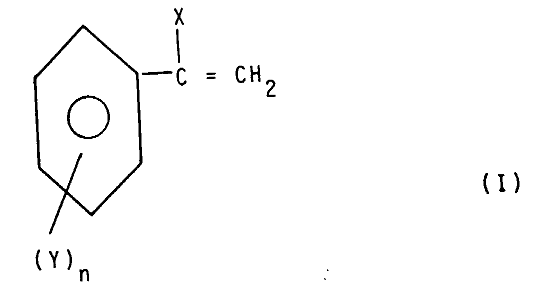 wherein:
X is hydrogen or C₁-C₄ alkyl;
Y is halogen or C₁-C₄ alkyl; and
n is 0 or an integer of from 1 to 5.

7. Compositions according to any one of claims 1 to 6, wherein the acrylic monomer has the general formula (II): 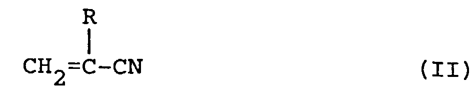 in which R is hydrogen or C₁-C₅ alkyl, particularly hydrogen.

8. Compositions according to any one of the preceding claims, wherein the graft copolymer (A) contains an olefinic elastomer having a low degree of unsaturation, such as EPM and EPDM rubber, wherein the weight ratio ethylene: propylene ranges from 90:10 to 20:80 and the content of unconjugated diene, if any, is from 4 to 50 in terms of the iodine number.

9. Compositions according to any one of the preceding claims, wherein the ethylenically unsaturated monomer having a carboxylic group or a derivative thereof in its molecule is selected from maleic acid, fumaric acid, maleic anhydride, maleic amide, unsaturated monocarboxylic acids such as acrylic acid, crotonic acid, vinyl-acetic acid, 2-, 3- or 4-pentenoic acid, alpha-ethyl-acrylic acid, beta-methyl-crotonic acid, 2-methyl-2-pentenoic acid, alpha-ethyl-crotonic acid, 2,2-dimethyl-3-butenoic acid, heptenoic acid, 2-octenoic acid, 9-tetradecenoic acid, 9-hexadecenoic acid, 2-octadecenoic acid, 9-octadecenoic acid, decosenoic acid, erucic acid, 2,4-pentadienoic acid, diallyl acetic acid, linoleic acid and linolenic acid and esters, amides and anhydrides of said acids and preferably is maleic anhydride.

10. Compositions according to any one of the preceding claims, wherein the polyamide resin is nylon 6 having an average molecular weight of at least about 10,000, preferably of at least about 15,000.

11. Compositions according to any one of the preceding claims, containing in addition one or more of stabilizers, UV stabilizers, plasticizers, lubricants, flame retardants, flow modifiers, antistatics, dyes, pigments, glass fibres and/or other inorganic fillers.

12. Shaped articles, produced from a composition according to any one of claims 1 to 11.

13. Use of the compositions of any one of claims 1 to 11 in injection molding and/or thermoforming.

## Patentansprüche

1. Thermoplastische Zusammensetzungen mit verbesserten mechanischen Eigenschaften, umfassend:
(A) 10 bis 90 Gewichts-% hoch schlagfestes vinylaromatisches Pfropf-Copolymer, zusammengesetzt aus einem vinylaromatisches Monomer/acrylisches Monomer-Copolymer und olefinischem Elastomer, wobei das Copolymer mindestens teilweise auf das olefinische Elastomer aufgepfropft ist, und, vorzugsweise darauf aufgepfropft, 0,1 bis 2 Gewichts-% eines ethylenisch ungesättigten Monomers mit einer Carboxylgruppe oder einem Derivat davon in seinem Molekül enthält;
(B) 90 bis 10 Gewichts-% Polyamid-Harz.

2. Zusammensetzungen nach Anspruch 1, in welchen das Gewichtsverhältnis (A) : (B) im Bereich von 70:30 bis 30:70 liegt.

3. Zusammensetzungen nach irgendeinem der vorangehenden Ansprüche, in welchen das Pfropf-Copolymer (A) 100 Gewichtsteile eines hoch schlagfesten vinylaromatischen Copolymers, zusammengesetzt aus 90 bis 30 Gewichts-% eines vinylaromatisches Monomer/acrylisches Monomer-Copolymers, zumindest teilweise auf 10 bis 70 Gewichts% eines olefinischen Elastomers gepfropft, und 0,1 bis 2 Gewichtsteile von Einheiten eines ethylenisch ungesättigten Monomers, das in seinem Molekül eine Carboxylgruppe oder ein Derivat davon aufweist, umfaßt, wobei das ethylenisch ungesättigte Monomer vorzugsweise auf das hoch schlagfeste vinylaromatische Copolymer aufgepropft ist.

4. Zusammensetzungen nach irgendeinem der vorangehenden Ansprüche, in welchen das Gewichtsverhältnis von vinylaromatischem Monomer zu acrylischem Monomer im hoch schlagfesten vinylaromatischen Copolymer im Bereich von 90:10 bis 50:50, insbesondere von 80:20 bis 60:40, liegt.

5. Zusammensetzungen nach irgendeinem der vorangehenden Ansprüche, in welchen die Menge an ethylenisch ungesättigtem Monomer, das in seinem Molekül eine Carboxylgruppe oder ein Derivat davon enthält, 0,3 bis 1 Gewichts-%, bezogen auf das Copolymer, beträgt.

6. Zusammensetzungen nach irgendeinem der vorangehenden Ansprüche, in welchen das vinylaromatische Monomer aus Verbindungen der allgemeinen Formel (I) ausgewählt ist: 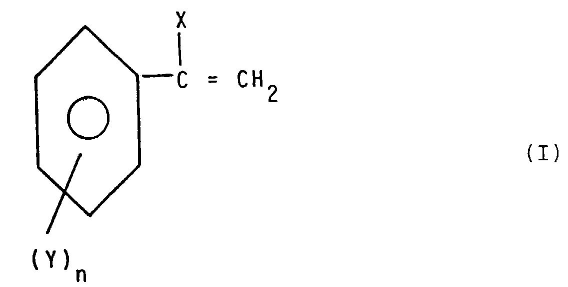 worin:
X für Wasserstoff oder C₁-C₄-Alkyl steht;
Y für Halogen oder C₁-C₄-Alkyl steht; und
n 0 oder eine ganze Zahl von 1 bis 5 ist.

7. Zusammensetzungen nach irgendeinem der Ansprüche 1 bis 6, in welchen das acrylische Monomer die allgemeine Formel (II) aufweist: 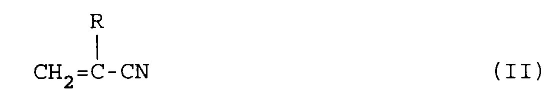 in welcher R für Wasserstoff oder C₁-C₅-Alkyl, insbesondere Wasserstoff, steht.

8. Zusammensetzungen nach irgendeinem der vorangehenden Ansprüche, in welchen das Pfropf-Copolymer (A) ein olefinisches Elastomer mit einem geringen Grad an Nichtsättigung, wie beispielsweise EPM- und EPDM-Kautschuk, enthält, worin das Gewichtsverhältnis Ethylen:Propylen im Bereich von 90:10 bis 20:80 liegt und der Gehalt an nicht-konjugiertem Dien, falls vorhanden, ausgedrückt als die Iodzahl 4 bis 50 beträgt.

9. Zusammensetzungen nach irgendeinem der vorangehenden Ansprüche, in welchen das ethylenisch ungesättigte Monomer mit einer Carboxylgruppe oder einem Derivat davon in seinem Molekül ausgewählt ist aus Maleinsäure, Fumarsäure, Maleinsäureanhydrid, Maleinsäureamid, ungesättigten Monocarbonsäuren wie beispielsweise Acrylsäure, Crotonsäure, Vinylessigsäure, 2-, 3- oder 4-Pentensäure, alpha-Ethylacrylsäure, beta-Methylcrotonsäure, 2-Methyl-2-pentensäure, alpha-Ethylcrotonsäure, 2,2-Dimethyl-3-butensäure, Heptensäure, 2-Octensäure, 9-Tetradecensäure, 9-Hexadecensäure, 2-Octadecensäure, 9-Octadecensäure, Decosensäure, Erucasäure, 2,4-Pentadiensäure, Diallylessigsäure, Linolsäure und Linolensäure und Estern, Amiden und Anhydriden dieser Säuren und vorzugsweise Maleinsäureanhydrid ist.

10. Zusammensetzungen nach irgendeinem der vorangehenden Ansprüche, in welchen das Polyamid-Harz Nylon 6 mit einem durchschnittlichen Molekulargewicht von mindestens etwa 10000, vorzugsweise mindestens etwa 15000, ist.

11. Zusammensetzungen nach irgendeinem der vorangehenden Ansprüche, die zusätzlich Stabilisatoren, UV-Stabilisatoren, Weichmacher, Schmiermittel, Flammverzögerungsmittel, Fließmodifikatoren, antistatische Mittel, Farbstoffe, Pigmente, Glasfasern und/oder andere anorganische Füllstoffe enthalten.

12. Formgegenstände, hergestellt aus einer Zusammensetzung nach irgendeinem der Ansprüche 1 bis 11.

13. Verwendung der Zusammensetzungen nach irgendeinem der Ansprüche 1 bis 11 beim Spritzguß und/oder bei der Warmformung.

## Revendications

1. Compositions thermoplastiques possédant des propriétés mécaniques améliorées et comprenant :
A) de 10 à 90 % en poids d'un copolymère vinyl-aromatique de greffage à haute résistance au choc, constitué d'un copolymère de monomère acrylique et de monomère vinyl-aromatique et d'un élastomère oléfinique, ce copolymère étant au moins en partie greffé sur l'élastomère oléfinique et comportant, de préférence greffé sur lui, de 0,1 à 2 % en poids d'un monomère à insaturation éthylénique dont la molécule contient un groupe carboxyle ou un dérivé d'un tel groupe,
et
B) de 90 à 10 % en poids d'une résine de polyamide.

2. Compositions conformes à la revendication 1, dans lesquelles le rapport pondéral (A)/(B) vaut de 70/30 à 30/70.

3. Compositions conformes à l'une des revendications précédentes, dans lesquelles le copolymère de greffage (A) comporte 100 parties en poids d'un copolymère vinyl-aromatique à haute résistance au choc, constitué de 90 à 30 % en poids d'un copolymère de monomère acrylique et de monomère vinyl-aromatique, au moins en partie greffé sur 10 à 70 % en poids d'un élastomère oléfinique, et de 0,1 à 2 parties en poids de motifs provenant d'un monomère à insaturation éthylénique dont la molécule contient un groupe carboxyle ou un dérivé d'un tel groupe, ce monomère à insaturation éthylénique étant de préférence greffé sur ledit copolymère vinyl-aromatique à haute résistance au choc.

4. Compositions conformes à l'une des revendications précédentes, dans lesquelles le rapport pondéral du monomère vinyl-aromatique au monomère acrylique, au sein du copolymère vinyl-aromatique à haute résistance au choc, vaut de 90/10 à 50/50, et en particulier, de 80/20 à 60/40.

5. Compositions conformes à l'une des revendications précédentes, dans lesquelles la quantité du monomère à insaturation éthylénique dont la molécule contient un groupe carboxyle ou un dérivé d'un tel groupe représente de 0,3 à 1 % du poids du copolymère.

6. Compositions conformes à l'une des revendications précédentes, dans lesquelles le monomère vinyl-aromatique est choisi parmi les composés de formule générale (I) : 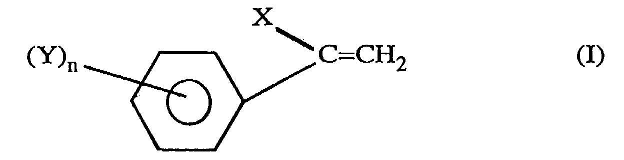 dans laquelle
X représente un atome d'hydrogène ou un groupe alkyle en C₁₋₄,
Y représente un atome d'halogène ou un groupe alkyle en C₁₋₄,
et n vaut 0 ou représente un nombre entier valant de 1 à 5.

7. Compositions conformes à l'une des revendications 1 à 6, dans lesquelles le monomère acrylique est de formule générale (II) : 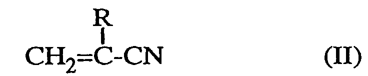 dans laquelle R représente un atome d'hydrogène ou un groupe alkyle en C₁₋₅, et en particulier un atome d'hydrogène.

8. Compositions conformes à l'une des revendications précédentes, dans lesquelles le copolymère de greffage (A) comporte un élastomère oléfinique à faible degré d'insaturation, comme un caoutchouc EPM ou EPDM, dans lequel le rapport pondéral éthylène/propylène vaut de 90/10 à 20/80 et la teneur en diène non conjugué, s'il y en a, correspond à un indice d'iode valant de 4 à 50.

9. Compositions conformes à l'une des revendications précédentes, dans lesquelles le monomère à insaturation éthylénique dont la molécule contient un groupe carboxyle ou un dérivé d'un tel groupe est choisi parmi l'acide maléique, l'acide fumarique, l'anhydride maléique, le maléamide, les acides monocarboxyliques insaturés comme l'acide acrylique, l'acide crotonique, l'acide vinyl-acétique, l'acide 2-, 3- ou 4-penténoïque, l'acide α-éthyl-acrylique, l'acide β-méthyl-crotonique, l'acide 2-méthyl-2-penténoïque, l'acide α-éthyl-crotonique, l'acide 2,2-diméthyl-3-buténoïque, l'acide hepténoïque, l'acide 2-octénoïque, l'acide 9-tétradécénoïque, l'acide 9-hexadécénoïque, l'acide 2-octadécénoïque, l'acide 9-octadécénoïque, l'acide docosénoïque, l'acide érucique, l'acide 2,4-pentadiénoïque, l'acide diallyl-acétique, l'acide linoléique et l'acide linolénique, et les esters, amides et anhydrides dérivés de ces acides, mais est de préférence de l'anhydride maléique.

10. Compositions conformes à l'une des revendications précédentes, dans lesquelles la résine de polyamide est du nylon 6 dont la masse moléculaire moyenne vaut au moins environ 10 000, et de préférence au moins environ 15 000.

11. Compositions conformes à l'une des revendications précédentes, qui contiennent en outre un ou plusieurs adjuvants choisis parmi les stabilisants, stabilisants anti-UV, plastifiants, lubrifiants, ignifugeants, modificateurs d'écoulement, antistatiques, colorants, pigments, et fibres de verre et/ou autres charges minérales.

12. Pièces façonnées, produites à partir d'une composition conforme à l'une des revendications 1 à 11.

13. Emploi de compositions conformes à l'une des revendications 1 à 11 dans des opérations de moulage par injection et/ou de thermoformage.
